# EUROPEAN PATENT APPLICATION

(11) **EP 2 573 722 A1**
(43) Date of publication of application: **27.03.2013**
(21) Application number: 12168708.1
(22) Date of filing: 21.05.2012
(51) Int. Cl.: G06Q 10/06

(54) **Method and system for providing technology trend using technology life cycle graph**

(30) Priority: 26.09.2011 KR 20110096877
(71) Applicant: Korea Institute Of Science and Technology Information, Daejeon 305-806 (KR)
(72) Inventor: Jung, Han Min, 305-333 Daejeon (KR); Lee, Mi Kyoung, 305-727 Daejeon (KR); Kim, Pyung, 305-150 Daejeon (KR); Lee, Seoung Woo, 305-333 Daejeon (KR); Seo, Dong Min, 302-282 Daejeon (KR); Kim, Jin Hyung, 448-160 Gyeaonggi-Do (KR); Lee, Jin Hee, 305-301 Daejeon (KR); Sung, Won Kyung, 305-390 Daejeon (KR)
(74) Representative: Regimbeau

(57) **Abstract**

The present invention provides a method for providing a technology trend displayed on a technology lifecycle graph, which is performed by a technology trend providing system, the method including: (a) obtaining year-specific stages or year-specific representative principal agents with respect to a specific technology displayed on the technology lifecycle graph; and (b) displaying the year-specific stages or the representative principal agent in each year with respect to the specific technology on the technology lifecycle graph. Thus, according to the present invention, it is possible to provide the year-specific stages and the year-specific representative principal agents with respect to each technology displayed on the technology lifecycle graph.

## Description

### BACKGROUND OF THE INVENTION

### 1. Field of the Invention

The present invention relates to a method and system for providing a technology trend using a technology lifecycle graph and, more particularly, to a method and system for providing a technology trend using a technology lifecycle graph which can obtain year-specific stages or year-specific representative principal agents with respect to a specific technology and display the obtained information on the technology lifecycle graph.

### 2. Description of the Related Art

The world is moving to a knowledge-based industrial society in which knowledge and information influence national competitiveness, and particularly, national science and technology competitiveness is recognized as a source of the national competitiveness.

Thus, many countries in the world are trying to draw and select key technologies and research projects in advance and to conduct intensive research and development so as to survive future competition.

For these reasons, Gartner, a global information and technology research and advisory firm, shows the lifecycle of a technology using a technology lifecycle graph in terms of technology hype.

However, the conventional technology lifecycle graph can only provide the technology belonging to each stage and cannot identify year-specific stages and year-specific representative principal agents with respect to each technology displayed on the technology lifecycle graph.

### SUMMARY OF THE INVENTION

The present invention has been made in an effort to solve the above-described problems associated with prior art, and an object of the present invention is to provide a method and system for providing a technology trend using a technology lifecycle graph which can provide year-specific stages and year-specific representative principal agents with respect to each technology displayed on the technology lifecycle graph.

According to an aspect of the present invention to achieve the above object of the present invention, there is provided a method for providing a technology trend displayed on a technology lifecycle graph, which is performed by a technology trend providing system, the method comprising: (a) obtaining year-specific stages or year-specific representative principal agents with respect to a specific technology displayed on the technology lifecycle graph; and (b) displaying the year-specific stages or the representative principal agent in each year with respect to the specific technology on the technology lifecycle graph, wherein step (b) may comprise displaying the representative principal agent in each year together with the magnitude of a result by linking to the corresponding year and displaying a change speed, which represents the time required by the specific technology to move to a next stage, on a node corresponding to the year-specific stage.

The method may further comprise, before step (a), constructing a technology trend information database in which year-specific stages and a representative principal agent in each year with respect to each technology to be displayed on the technology lifecycle graph are stored.

The constructing of the technology trend information database may comprise: obtaining literatures including technologies to be displayed on the technology lifecycle by analyzing literatures stored in a heterogeneous literature providing device and extracting principal agents from the obtained literatures; determining year-specific stages of each technology by classifying the obtained literatures and the extracted principal agents for each year and obtaining a principal agent having the largest magnitude of a result from the principal agents classified for each year as a year-specific representative principal agent; and constructing the technology trend information database in which the year-specific stages and the year-specific representative principal agents with respect to each of the obtained technologies are stored.

The method may further comprise, if an update of a literature stored in the heterogeneous literature providing device is detected, obtaining literatures including technologies to be displayed on the technology lifecycle graph by analyzing the corresponding literature, extracting principal agents from the obtained literatures, determining the year-specific stages of each technology by classifying the obtained literatures and the extracted principal agents for each year, obtaining a principal agent having the largest magnitude of the result from the principal agents classified for each year as a year-specific representative principal agent, and updating the technology trend information database.

The magnitude of the result may be a score calculated by applying a weight to the number of literatures of the corresponding technology researched and developed by the corresponding principal agent or to each of the number of literatures.

The method may further comprise, if a display of detailed information on the specific technology displayed on the technology lifecycle graph is requested, displaying detailed information including at least one of external link, metadata, and year-specific result with respect to the corresponding specific technology in a certain area of the technology lifecycle graph.

According to another aspect of the present invention to achieve the above object of the present invention, there is provided a system for providing a technology trend using a technology lifecycle graph, the system comprising: a technology trend information database construction device which constructs a technology trend information database in which year-specific stages and year-specific representative principal agents with respect to each technology to be displayed on a technology lifecycle graph are stored; and a technology trend providing device which obtains year-specific stages or year-specific representative principal agents with respect to a specific technology displayed on the technology lifecycle graph and displays the obtained year-specific stages or year-specific representative principal agents on the technology lifecycle graph, wherein the technology trend providing device may display the representative principal agent in each year together with the magnitude of a result by linking to the corresponding year and display a change speed, which represents the time required by the specific technology to move to a next stage, on a node corresponding to the year-specific stage.

The technology trend information database construction device may obtain literatures including technologies to be displayed on the technology lifecycle by analyzing literatures stored in a heterogeneous literature providing device, extract principal agents from the obtained literatures, determine year-specific stages of each technology by classifying the obtained literatures and the extracted principal agents for each year, obtain a principal agent having the largest magnitude of a result from the principal agents classified for each year as a year-specific representative principal agent, and construct the technology trend information database in which the year-specific stages and the year-specific representative principal agents with respect to each technology are stored.

If a specific technology is selected from the technology lifecycle graph, the technology trend providing device may obtain year-specific stages or year-specific representative principal agents with respect to the selected specific technology from the technology trend information database and display the obtained year-specific stages or year-specific representative principal agents on the technology lifecycle graph.

The magnitude of the result may be a score calculated by applying a weight to the number of literatures of the corresponding technology researched and developed by the corresponding principal agent or to each of the number of literatures.

If a display of detailed information on the specific technology displayed on the technology lifecycle graph is requested, the technology trend providing device may display detailed information including at least one of external link, metadata, and year-specific result with respect to the corresponding specific technology in a certain area of the technology lifecycle graph.

According to still another aspect of the present invention to achieve the above object of the present invention, there is provided a technology trend information database construction device comprising: a technical glossary in which technical terms to be displayed on a technology lifecycle graph are defined; a literature analysis unit which obtains literatures including technologies defined in the technical glossary by analyzing literatures stored in a heterogeneous literature providing device and extracts principal agents from the obtained literatures; a year-specific stage determination unit which determines year-specific stages of each technology by classifying the obtained literatures for each year; a year-specific representative principal agent acquisition unit which classifies the principal agents of the extracted literatures for each year and obtains a principal agent having the largest magnitude of a result from the principal agents classified for each year as a year-specific representative principal agent; and a technology trend information database management unit which creates a technology trend information database in which year-specific stages and year-specific representative principal agents with respect to each of the obtained technologies are stored.

If an update of a literature stored in the heterogeneous literature providing device is detected, the technology trend information database management unit may obtain literatures including technologies to be displayed on the technology lifecycle graph by analyzing the corresponding literature, extract principal agents from the obtained literatures, determine the year-specific stages of each technology by classifying the obtained literatures and the extracted principal agents for each year, obtain a principal agent having the largest magnitude of the result from the principal agents classified for each year as a year-specific representative principal agent, and update the technology trend information database.

The technology trend information database construction device may further comprise a development speed estimation unit which estimates which stage of the technology lifecycle graph a future stage of each technology belongs to or estimates the time required by the corresponding technology to move to a next stage using the year-specific stages determined by the year-specific stage determination unit and stores the corresponding information in the technology trend information database.

The year-specific representative principal agent acquisition unit may assign the principal agent having the largest magnitude of the result as a representative principal agent by accumulating the principal agents extracted from each literature for each technology, and the magnitude of the result may be a score calculated by applying a weight to the number of literatures of the corresponding technology researched and developed by the corresponding principal agent or to each of the number of literatures.

According to yet another aspect of the present invention to achieve the above object of the present invention, there is provided a technology trend providing device comprising: a technology trend information acquisition unit which obtains year-specific stages or year-specific representative principal agents with respect to a specific technology displayed on a technology lifecycle graph; and a visualization unit which displays the obtained year-specific stages or year-specific representative principal agents on the technology lifecycle graph, wherein the visualization unit may display the representative principal agent in each year together with the magnitude of a result by linking to the corresponding year and display a change speed, which represents the time required by the specific technology to move to a next stage, on a node corresponding to the year-specific stage.

The technology trend providing device may further comprise a technology trend information database in which year-specific stages and year-specific representative principal agents with respect to each technology to be displayed on a technology lifecycle graph are stored.

The magnitude of the result may be a score calculated by applying a weight to the number of literatures of the corresponding technology researched and developed by the corresponding principal agent or to each of the number of literatures.

The technology trend providing device of claim may further comprise a detailed information providing unit which, if a display of detailed information on the specific technology displayed on the technology lifecycle graph is requested, displays detailed information including at least one of external link, metadata, and year-specific result with respect to the corresponding specific technology in a certain area of the technology lifecycle graph.

### BRIEF DESCRIPTION OF THE DRAWINGS

The above and other features and advantages of the present invention will become more apparent by describing in detail exemplary embodiments thereof with reference to the attached drawings in which:
FIG. 1 is a diagram showing a technology trend providing system using a technology lifecycle graph according to the present invention;
FIG. 2 is a block diagram schematically showing the configuration of a technology trend information database construction device according to the present invention;
FIG. 3 is a block diagram schematically showing the configuration of a technology trend providing device according to the present invention;
FIG. 4 is a flowchart illustrating a method for providing technology trend information on a specific technology by the technology trend providing system according to the present invention;
FIG. 5 is a flowchart illustrating a method for constructing a technology trend information database by the technology trend information database construction device according to the present invention;
FIG. 6 is an exemplary diagram of a technology lifecycle graph according to the present invention;
FIG. 7 is an exemplary diagram of a technology lifecycle graph showing year-specific stages with respect to a specific technology according to the present invention; and
FIG. 8 is an exemplary diagram of a technology lifecycle graph showing year-specific stages and year-specific representative principal agents with respect to a specific technology according to the present invention.

### Description of Reference Numerals

- 100:: heterogeneous literature providing device
- 200:: technology trend information database construction device
- 202:: technical glossary
- 204:: communication unit
- 206:: literature analysis unit
- 208:: year-specific stage determination unit
- 210:: year-specific representative principal agent acquisition unit
- 212:: technology trend information database management unit
- 214:: technology trend information database
- 216:: development speed estimation unit
- 300:: technology trend providing device
- 302:: technology trend information database
- 306:: input unit
- 308:: technology trend information acquisition unit
- 310:: visualization unit
- 312:: detailed information providing unit

### DETAILED DESCRIPTION OF THE INVENTION

Details of the forgoing objects, technical construction and corresponding operational effect of the present invention will be more clearly understood by the following detailed descriptions based on the drawings attached to the specification of the present invention.

The term "technology lifecycle" as described herein refers to a model in which the development process of a technology is divided into stages, and the term "technology lifecycle graph" refers to a graph in which the technology lifecycle is divided into stages and visualized.

In the technology lifecycle graph, the stages are defined according to the development process of a technology, and the stages may include a "Technology Trigger" stage, a "Peak of Inflated Expectations" stage, a "Trough of Disillusionment" stage, a "Slope of Enlightenment" stage, and a "Plateau of Productivity" stage.

The Technology Trigger stage refers to a phase where the verification of a theory and the interest of media are triggered and a potential technology is developed, and the Peak of Inflated Expectations stage refers to a phase where the initial public relations introduce a number of successful cases and some enterprises are engaged in intensive research and development. The Trough of Disillusionment stage refers to a phase where experiments and developments result in repeated failures, the Slope of Enlightenment stage refers to a phase where the benefits of the corresponding technology are materialized through a number of cases and the public's understanding is broadened, and the Plateau of Productivity stage refers to a phase where the products are to be supplied to a majority of consumers beyond the early adopter phase and the viability of the supplier can be reliably assessed.

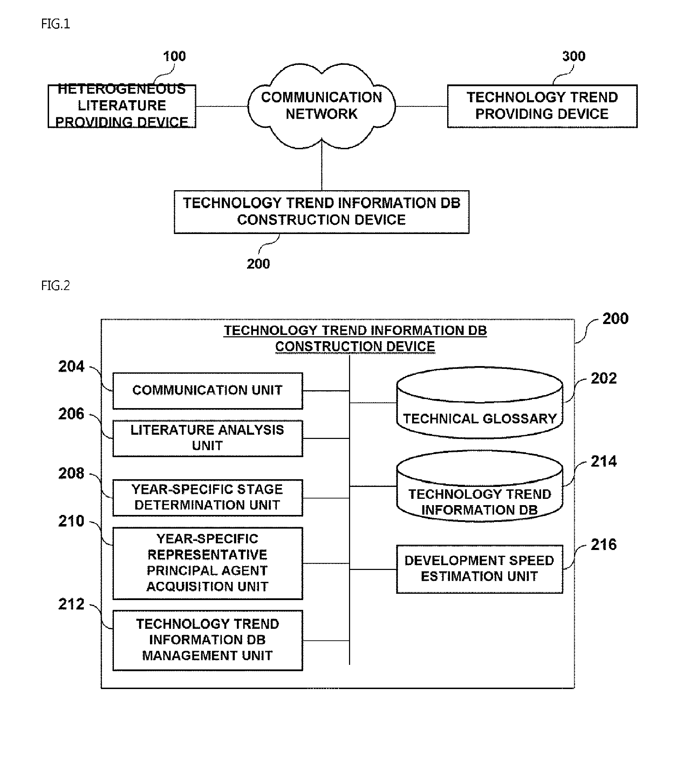

FIG. 1 is a diagram showing a technology trend providing system using a technology lifecycle graph according to the present invention.

Referring to FIG. 1, a technology trend providing system using a technology lifecycle graph comprises a heterogeneous literature providing device 100, a technology trend information database construction device 200, and a technology trend providing device 300.

The heterogeneous literature providing device 100 integrates at least one of resources such as papers, patents, reports, academic data, newspapers, and standards.

The technology trend information database construction device 200 constructs a technology trend information database in which year-specific stages and year-specific representative principal agents with respect to each technology to be displayed on a technology lifecycle graph are stored.

That is, the technology trend information database construction device 200 obtains literatures including technologies to be displayed on the technology lifecycle by analyzing the literatures stored in the heterogeneous literature providing device 100, extracts principal agents from the obtained literatures, determines year-specific stages of each technology by classifying the obtained literatures and the extracted principal agents for each year, obtains a principal agent having the largest magnitude of a result from the principal agents classified for each year as a year-specific representative principal agent, and constructs the technology trend information database in which the year-specific stages and the year-specific representative principal agents with respect to each technology are stored.

The technology trend information database construction device 200 that performs the above-described functions will be described in more detail with reference to FIG. 2 later.

If a specific technology is selected from the technology lifecycle graph, the technology trend providing device 300 obtains year-specific stages or year-specific representative principal agents with respect to the selected specific technology from the technology trend information database and displays the obtained year-specific stages or year-specific representative principal agents on the technology lifecycle graph.

Moreover, the technology trend providing device 300 displays the representative principal agent in each year together with the magnitude of a result by linking to the corresponding year and displays a change speed, which represents the time required by the specific technology to move to a next stage, on a node corresponding to the year-specific stage. Here, the magnitude of the result refers to a score calculated by applying a weight to the number of literatures of the corresponding technology researched and developed by the corresponding principal agent or to each of the number of literatures.

Furthermore, if a display of detailed information on the specific technology displayed on the technology lifecycle graph is requested, the technology trend providing device 300 displays the detailed information including at least one of external link, metadata, and year-specific result with respect to the corresponding specific technology in a certain area of the technology lifecycle graph. Here, information such as the external link, metadata, and year-specific result with respect to the technologies to be displayed on the technology lifecycle graph is stored in the technology trend information database.

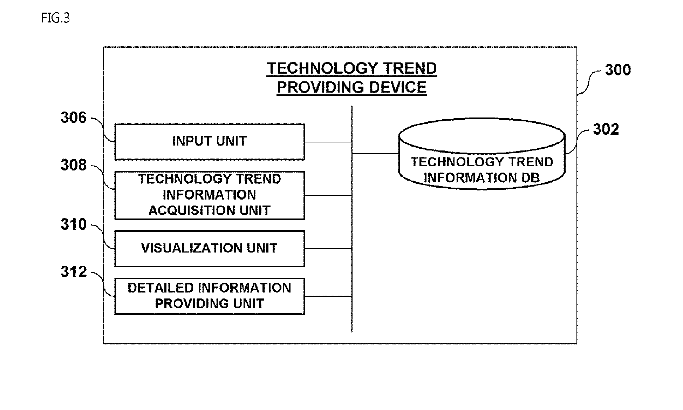

The technology trend providing device 300 that performs the above-described functions will be described in more detail with reference to FIG. 3 later.

Although it has been described above that the technology trend information database construction device 200 and the technology trend providing device 300 are separately provided, the technology trend information database construction device 200 and the technology trend providing device 300 may be configured as a single device.

FIG. 2 is a block diagram schematically showing the configuration of the technology trend information database construction device according to the present invention.

Referring to FIG. 2, the technology trend information database construction device 200 comprises a technical glossary 202, a communication unit 204, a literature analysis unit 206, a year-specific stage determination unit 208, a year-specific representative principal agent acquisition unit 210, a technology trend information database management unit 212, and a technology trend information database 214.

Technical terms to be displayed on the technology lifecycle graph are defined in the technical glossary 202.

The literature analysis unit 206 obtains literatures including technologies defined in the technical glossary 202 by analyzing the literatures stored in the heterogeneous literature providing device and extracts principal agents from the obtained literatures. That is, the literature analysis unit 206 analyzes the literatures stored in the heterogeneous literature providing device using a method such as text mining, metadata analysis, etc., extracts the literatures including the technologies defined in the technical glossary, and extracts the principal agents from the obtaining literatures. The principal agent refers to a researcher, a research institute, a country, etc. who publishes or researches the corresponding literature.

The year-specific stage determination unit 208 classifies the literatures obtained by the literature analysis unit 206 for each year and determines which stage of the technology lifecycle graph each technology belongs to for each year.

That is, the year-specific stage determination unit 208 obtains year-specific feature values by classifying the obtained literatures for each year and creates a year-specific feature set based on the obtained year-specific feature values. Then, the year-specific stage determination unit 208 obtains a year-specific integrated feature value by applying a weight to each feature value of the created year-specific feature set. Next, the year-specific stage determination unit 208 compares the obtained integrated feature value with feature values of a pre-stored stage-specific answer feature set and determines a stage having a feature value of the most similar answer feature set as a stage of the corresponding year. The stage-specific answer feature set is predetermined and the feature value refers to a value of each feature obtained from literatures such as papers, patents, reports, academic data, newspapers, and standards. The feature refers to a ratio of paper to patent, the number of papers, the number of patents, etc. and can be set and changed by a manager.

The year-specific stage determination unit 208 classifies the literatures for each year and obtains the feature values such as the ratio of paper to patent, the number of papers, the number of patents, etc. for each year such as 2008, 2009, 2010, etc. Then, the year-specific stage determination unit 208 classifies the obtained feature values for each year and creates a feature set for each year as shown in the following table 1:

**[Table 1]**

| ID | Descriptions | Value | Unit |
|---|---|---|---|
| 1 | Ratio of paper to patent | 130 | % |
| 2 | The number of papers | 17 | Case |
| 3 | The number of fields where a corresponding technology is found in papers | 4 | Piece |
| 4 | The number of lower technology names | 8 | Piece |
| 5 | ... | ... | ... |

Referring to Table 1, the feature set contains features and feature values corresponding to the features, and the feature values are expressed in various ways such as %, the number of pieces, the number of cases or, etc.

The features contained in the feature set are predefined elements.

Then, the year-specific stage determination unit 208 obtains a year-specific integrated feature value by applying a predefined weight to each feature value of the created year-specific feature set. Subsequently, the year-specific stage determination unit 208 compares the obtained integrated feature value with feature values of a pre-stored stage-specific answer feature set and determines a stage having a feature value of the most similar answer feature set as a stage of the corresponding year.

For example, the year-specific stage determination unit 208 determines which stage of the technology lifecycle graph a "fuel cell" technology belongs to for each year such as 2007, 2008, 2009, and 2010. That is, the year-specific stage determination unit 208 determines the stage of the technology lifecycle graph to which each technology belongs to in such a manner that it determines the year of 2007 as the Technology Trigger stage because the integrated feature value in 2007 is most similar to the feature value of the Technology Trigger stage of the answer feature set, the years of 2008 and 2009 as the Peak of Inflated Expectations stage because the integrated feature value in 2008 and 2008 is most similar to the feature value of the Peak of Inflated Expectations stage of the answer feature set, and the year of 2010 as the Trough of Disillusionment stage because the integrated feature value in 2010 is most similar to the feature value of the Trough of Disillusionment stage of the answer feature set.

The year-specific representative principal agent acquisition unit 210 classifies the principal agents of the literatures extracted by the literature analysis unit 206 for each year and obtains a principal agent having the largest magnitude of a result from the principal agents classified for each year as a year-specific representative principal agent.

That is, the year-specific representative principal agent acquisition unit 210 obtains the magnitude of the result of each principal agent using the literatures accumulated with respect to each principal agent classified for each year and assigns the principal agent having the largest magnitude of the result as a representative principal agent of the corresponding year. Here, the magnitude of the result refers to a score calculated by applying a weight to the number of literatures of the corresponding technology researched and developed by the corresponding principal agent or to each of the number of literatures. Moreover, the representative principal agent refers to a principal agent, such as a country, an institute, an enterprise, a researcher, etc., who performs extensive research and development on a specific technology.

For example, as a result of the examination of the literatures of the "fuel cell" technology accumulated with respect to each principal agent in 2010, if the number of literatures of "principal agent A" is 15, if the number of literatures of "principal agent B" is 10, and if the number of literatures of "principal agent C" is 5, the year-specific representative principal agent acquisition unit 210 assigns "principal agent A" as a representative principal agent of the "fuel cell" technology in 2010 because the principal agent A has the largest number of literatures with respect to the "fuel cell" technology.

The technology trend information database management unit 212 creates technology trend information storing the year-specific stages with respect to each technology determined by the year-specific stage determination unit 208 and the year-specific representative principal agents obtained by the year-specific representative principal agent acquisition unit 210, and stores the created technology trend information in the technology trend information database 214.

Thus, the year-specific stages and the year-specific representative principal agents with respect to the technologies to be displayed on the technology lifecycle graph are stored in the technology trend information database 214.

Moreover, if an update of a literature stored in the heterogeneous literature providing device is detected, the technology trend information database management unit 212 obtains literatures including technologies to be displayed on the technology lifecycle graph by analyzing the corresponding literature, extracts principal agents from the obtained literatures, determines the year-specific stages of each technology by classifying the obtained literatures and the extracted principal agents for each year, obtains a principal agent having the largest magnitude of the result from the principal agents classified for each year as a year-specific representative principal agent, and updates the technology trend information database 214.

The technology trend information database construction device 200 having the above-described configuration may further comprise a development speed estimation unit 216.

The development speed estimation unit 216 estimates which stage of the technology lifecycle graph a future stage of the specific technology belongs to or estimates the time required by the specific technology to move to a next stage using the year-specific stages determined by the year-specific stage determination unit 208.

The development speed estimation unit 216 may estimate the development speed using, for example, an exponential moving average.

For example, a case where the year-specific stages are determined as a first stage in 2005, the first stage in 2006, a second stage in 2007, a third stage in 2008, the third stage in 2009, and the third stage in 2010 will be described below.

Since the exponential moving averages over a three-year period calculated are 1.33 in 2005 to 2007, 2 in 2006 to 2008, 2.66 in 2007 to 2009, and 3 in 2008 to 2010, an exponential moving average of about 3.18 is obtained for 2009 to 2011 based on the slope of the average values.

If the stage of 2011 is obtained using the exponential moving average in 2009 to 2011, it is 3.54.

Therefore, the development speed estimation unit 216 can estimate a year corresponding to a fourth stage or a fifth stage following the third stage in the above-described manner.

FIG. 3 is a block diagram schematically showing the configuration of the technology trend providing device according to the present invention.

Referring to FIG. 3, the technology trend providing device 300 comprises a technology trend information database 302, an input unit 306, a technology trend information acquisition unit 308, a visualization unit 310, and a detailed information providing unit 312.

The year-specific stages and the year-specific representative principal agents with respect to the technologies to be displayed on the technology lifecycle graph are stored in the technology trend information database 302.

In the technology trend information database 302, it is defined which stage of the technology lifecycle graph a year-specific stage with respect to each technology defined in the technical glossary belongs to. The year-specific stages with respect to each technology may be determined by an expert.

That is, in the technology lifecycle graph, the stages are defined according to the development process of a technology, and the stages may include a "Technology Trigger" stage, a "Peak of Inflated Expectations" stage, a "Trough of Disillusionment" stage, a "Slope of Enlightenment" stage, and a "Plateau of Productivity" stage.

Moreover, the stages of the technology lifecycle graph may be set or changed in a different manner such as a first stage, a second stage, a third stage, etc.

Although it has been described above that the technology trend providing device 300 comprises the technology trend information database 302, the technology trend information database 302 may exists outside.

The input unit 306 provides an interface with a user and receives a specific technology from the user. For example, the input unit may be an interface module, a key input unit, etc. which is connected to a user terminal via a communication network.

The technology trend information acquisition unit 308 obtains year-specific stages or year-specific representative principal agents with respect to a specific technology to be displayed on the technology lifecycle graph. That is, the technology trend information acquisition unit 308 obtains the year-specific stages or the year-specific representative principal agents with respect to the specific technology selected by the user from the technologies displayed on the technology lifecycle graph from the technology trend information database 302.

The visualization unit 310 displays the year-specific stages or the year-specific representative principal agents obtained by the technology trend information acquisition unit 308 on the technology lifecycle graph.

Here, the visualization unit 310 displays the representative principal agent in each year together with the magnitude of a result by linking to the corresponding year and displays a change speed, which represents the time required by the specific technology to move to a next stage, on a node corresponding to the year-specific stage.

If a display of detailed information on the specific technology displayed on the technology lifecycle graph is input, the detailed information providing unit 312 obtains detailed information including at least one of external link, metadata, and year-specific result with respect to the corresponding specific technology and displays the obtained information in a certain area of the technology lifecycle graph.

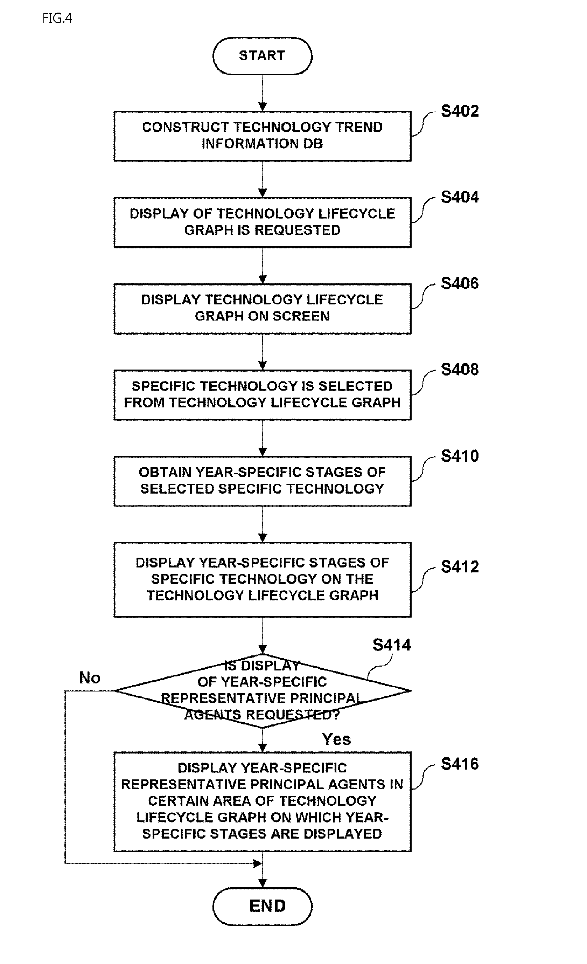

FIG. 4 is a flowchart illustrating a method for providing technology trend information on a specific technology by the technology trend providing system according to the present invention.

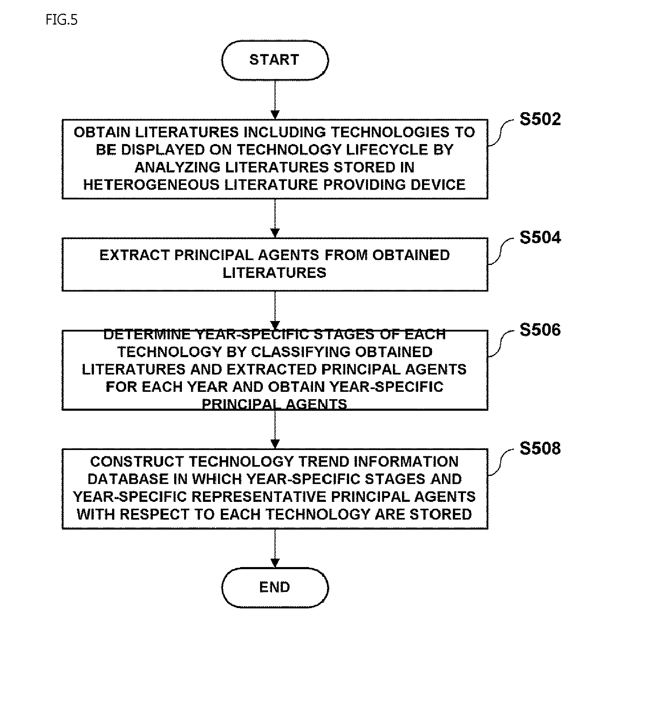

Referring to FIG. 4, the technology trend providing system constructs a technology trend information database using the literatures stored in the heterogeneous literature providing device (S402). The method for constructing the technology trend information database by the technology trend providing system will be described in more detail with reference to FIG. 5 later.

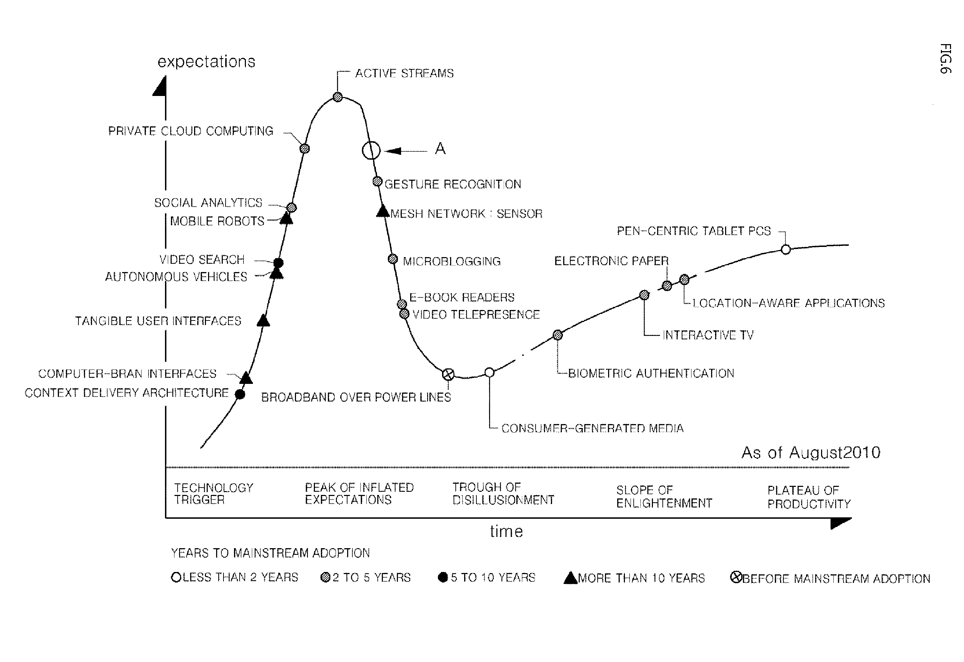

After performing the step S402, if a display of a technology lifecycle graph is requested from a user (S404), the technology trend providing system displays the technology lifecycle graph on a screen (S406). Referring to FIG. 6 with respect to the technology lifecycle graph, the technology lifecycle is classified into each stage in the technology lifecycle graph and the development process of the technology is displayed in each stage.

If a specific technology is selected by the user from the technology lifecycle graph (S408), the technology trend providing system obtains year-specific stages with respect to the selected specific technology from the technology trend information database (S410). That is, the technology trend providing system obtains the year-specific stages with respect to the specific technology from the technology trend information database.

After performing the step S41 0, the technology trend providing system displays the year-specific stages or a representative principal agent in each year on the technology lifecycle graph (S412). Here, the technology trend providing system displays the representative principal agent in each year together with the magnitude of a result by linking to the corresponding year and displays a change speed, which represents the time required by the specific technology to move to a next stage, on a node corresponding to the year-specific stage.

After performing the step S412, if a display of the year-specific representative principal agents with respect to the specific technology is requested (S414), the technology trend providing system displays the year-specific representative principal agents in a certain area of the technology lifecycle graph on which the year-specific stages are displayed (S416).

Although it has been described above that the representative principal agent of each technology is displayed on the technology lifecycle graph, if the display of the representative principal agents is requested by the user, the year-specific stages and the year-specific representative principal agents with respect to the specific technology may be displayed on the technology lifecycle graph in the above step S412.

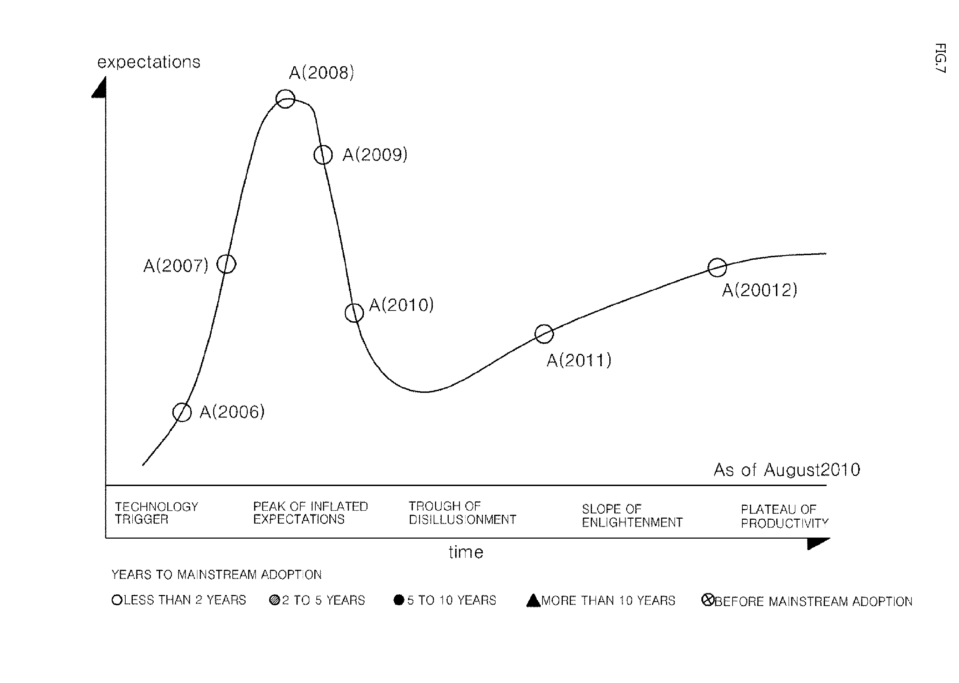

For example, if the user selects technology A from the technology lifecycle graph as shown in FIG. 6, the technology trend providing system displays year-specific stages with respect to technology A in corresponding stages of the technology lifecycle graph as shown in FIG. 7. That is, technology A is displayed in the Technology Trigger stage in 2006 and 2007, in the Technology Trigger stage in 2008, and in the Peak of Inflated Expectations stage in 2009 and 2010.

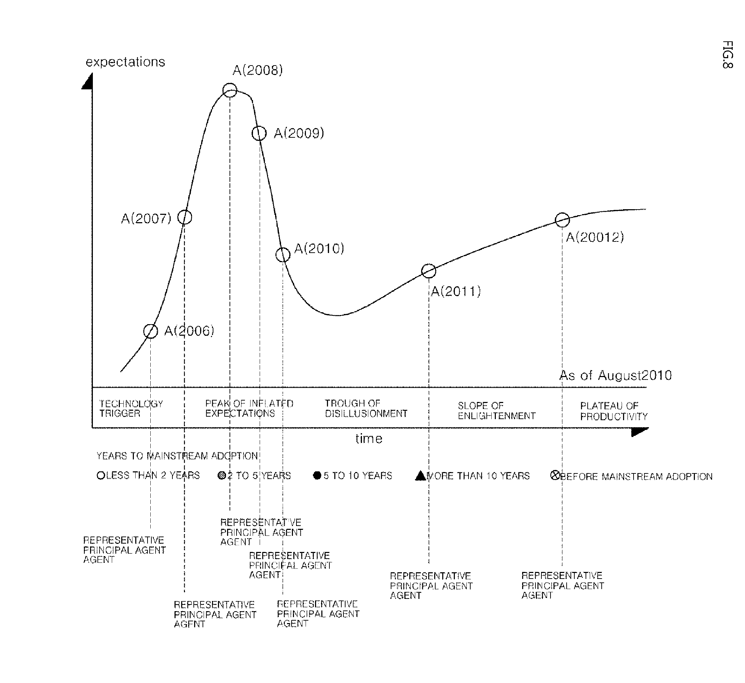

Moreover, if the display of the year-specific representative principal agents with respect to technology A is requested, the technology trend providing system may display the year-specific representative principal agent in each year. Referring to FIG. 8, the shape of the node with respect to each of the year-specific representative principal agents is displayed as a circle such that the magnitude of a result may be displayed with the size of the circle. As can be seen, the larger the circle, the larger the magnitude of the result, and the smaller the circle, the smaller the magnitude of the result. Although the shape of the node is displayed as the circle herein, it is obvious that the node can be displayed in various shapes such as a square, a triangle, etc.

FIG. 5 is a flowchart illustrating a method for constructing the technology trend information database by the technology trend information database construction device according to the present invention.

Referring to FIG. 5, the technology trend information database construction device obtains literatures including technologies to be displayed on the technology lifecycle by analyzing the literatures stored in the heterogeneous literature providing device (S502) and extracts principal agents from the obtained literatures (S504).

Then, the technology trend information database construction device determines year-specific stages of each technology by classifying the obtained literatures and the extracted principal agents for each year and obtains a principal agent having the largest magnitude of a result from the principal agents classified for each year as a year-specific representative principal agent (S506).

Subsequently, the technology trend information database construction device constructs the technology trend information database in which the year-specific stages and the year-specific representative principal agents with respect to each of the obtained technologies are stored (S508).

Here, if an update of a literature stored in the heterogeneous literature providing device is detected, the technology trend information database construction device obtains literatures including technologies to be displayed on the technology lifecycle graph by analyzing the corresponding literature, extracts principal agents from the obtained literatures, determines the year-specific stages of each technology by classifying the obtained literatures and the extracted principal agents for each year, obtains a principal agent having the largest magnitude of the result from the principal agents classified for each year as a year-specific representative principal agent, and updates the technology trend information database.

As described above, according to the present invention, it is possible to provide the year-specific stages and the year-specific representative principal agents with respect to each technology displayed on the technology lifecycle graph.

As such, it will be understood by those skilled in the art to which the present invention pertains that the present invention can be implemented in other detailed forms without departing from the scope and spirit of the invention. Therefore, it should be understood that the above exemplary embodiments are only exemplified in all aspects and are not restrictive. The scope of the present invention should be defined by the attached claims, rather than the detailed description, and all additions, substitutions or modifications derived from the meaning and scope of the accompanying claims and equivalent concept thereof should be interpreted as being included in the scope of the present invention.

## Claims

1. A computer-implemented method for providing a technology trend displayed on a technology lifecycle graph, which is performed by a technology trend providing system, the method comprising:
(a) obtaining year-specific stages or year-specific representative principal agents with respect to a specific technology displayed on the technology lifecycle graph; and
(b) displaying the year-specific stages or the representative principal agent in each year with respect to the specific technology on the technology lifecycle graph,
wherein step (b) comprises displaying the representative principal agent in each year together with the magnitude of a result by linking to the corresponding year and displaying a change speed, which represents the time required by the specific technology to move to a next stage, on a node corresponding to the year-specific stage.

2. The method of claim 1, further comprising, before step (a), constructing a technology trend information database in which year-specific stages and a representative principal agent in each year with respect to each technology to be displayed on the technology lifecycle graph are stored.

3. The method of claim 2, wherein the constructing of the technology trend information database comprises:
obtaining literatures including technologies to be displayed on the technology lifecycle by analyzing literatures stored in a heterogeneous literature providing device and extracting principal agents from the obtained literatures;
determining year-specific stages of each technology by classifying the obtained literatures and the extracted principal agents for each year and obtaining a principal agent having the largest magnitude of a result from the principal agents classified for each year as a year-specific representative principal agent; and
constructing the technology trend information database in which the year-specific stages and the year-specific representative principal agents with respect to each of the obtained technologies are stored.

4. The method of claim 3, further comprising, if an update of a literature stored in the heterogeneous literature providing device is detected, obtaining literatures including technologies to be displayed on the technology lifecycle graph by analyzing the corresponding literature, extracting principal agents from the obtained literatures, determining the year-specific stages of each technology by classifying the obtained literatures and the extracted principal agents for each year, obtaining a principal agent having the largest magnitude of the result from the principal agents classified for each year as a year-specific representative principal agent, and updating the technology trend information database.

5. The method of claim 1, further comprising, if a display of detailed information on the specific technology displayed on the technology lifecycle graph is requested, displaying detailed information including at least one of external link, metadata, and year-specific result with respect to the corresponding specific technology in a certain area of the technology lifecycle graph.

6. A system for providing a technology trend using a technology lifecycle graph, the system comprising:
a technology trend information database construction device which constructs a technology trend information database in which year-specific stages and year-specific representative principal agents with respect to each technology to be displayed on a technology lifecycle graph are stored; and
a technology trend providing device which obtains year-specific stages or year-specific representative principal agents with respect to a specific technology displayed on the technology lifecycle graph and displays the obtained year-specific stages or year-specific representative principal agents on the technology lifecycle graph,
wherein the technology trend providing device displays the representative principal agent in each year together with the magnitude of a result by linking to the corresponding year and displays a change speed, which represents the time required by the specific technology to move to a next stage, on a node corresponding to the year-specific stage.

7. The system of claim 6, wherein the technology trend information database construction device obtains literatures including technologies to be displayed on the technology lifecycle by analyzing literatures stored in a heterogeneous literature providing device, extracts principal agents from the obtained literatures, determines year-specific stages of each technology by classifying the obtained literatures and the extracted principal agents for each year, obtains a principal agent having the largest magnitude of a result from the principal agents classified for each year as a year-specific representative principal agent, and constructs the technology trend information database in which the year-specific stages and the year-specific representative principal agents with respect to each technology are stored.

8. The system of claim 6, wherein if a specific technology is selected from the technology lifecycle graph, the technology trend providing device obtains year-specific stages or year-specific representative principal agents with respect to the selected specific technology from the technology trend information database and displays the obtained year-specific stages or year-specific representative principal agents on the technology lifecycle graph.

9. The system of claim 6, wherein if a display of detailed information on the specific technology displayed on the technology lifecycle graph is requested, the technology trend providing device displays detailed information including at least one of external link, metadata, and year-specific result with respect to the corresponding specific technology in a certain area of the technology lifecycle graph.

10. A technology trend information database construction device comprising:
a technical glossary in which technical terms to be displayed on a technology lifecycle graph are defined;
a literature analysis unit which obtains literatures including technologies defined in the technical glossary by analyzing literatures stored in a heterogeneous literature providing device and extracts principal agents from the obtained literatures;
a year-specific stage determination unit which determines year-specific stages of each technology by classifying the obtained literatures for each year;
a year-specific representative principal agent acquisition unit which classifies the principal agents of the extracted literatures for each year and obtains a principal agent having the largest magnitude of a result from the principal agents classified for each year as a year-specific representative principal agent; and
a technology trend information database management unit which creates a technology trend information database in which year-specific stages and year-specific representative principal agents with respect to each of the obtained technologies are stored.

11. The technology trend information database construction device of claim 10, wherein if an update of a literature stored in the heterogeneous literature providing device is detected, the technology trend information database management unit obtains literatures including technologies to be displayed on the technology lifecycle graph by analyzing the corresponding literature, extracts principal agents from the obtained literatures, determines the year-specific stages of each technology by classifying the obtained literatures and the extracted principal agents for each year, obtains a principal agent having the largest magnitude of the result from the principal agents classified for each year as a year-specific representative principal agent, and updates the technology trend information database.

12. The technology trend information database construction device of claim 10, further comprising a development speed estimation unit which estimates which stage of the technology lifecycle graph a future stage of each technology belongs to or estimates the time required by the corresponding technology to move to a next stage using the year-specific stages determined by the year-specific stage determination unit and stores the corresponding information in the technology trend information database.

13. A technology trend providing device comprising:
a technology trend information acquisition unit which obtains year-specific stages or year-specific representative principal agents with respect to a specific technology displayed on a technology lifecycle graph; and
a visualization unit which displays the obtained year-specific stages or year-specific representative principal agents on the technology lifecycle graph,
wherein the visualization unit displays the representative principal agent in each year together with the magnitude of a result by linking to the corresponding year and displays a change speed, which represents the time required by the specific technology to move to a next stage, on a node corresponding to the year-specific stage.

14. The technology trend providing device of claim 13, further comprising a technology trend information database in which year-specific stages and year-specific representative principal agents with respect to each technology to be displayed on a technology lifecycle graph are stored.

15. The technology trend providing device of claim 13, further comprising a detailed information providing unit which, if a display of detailed information on the specific technology displayed on the technology lifecycle graph is requested, displays detailed information including at least one of external link, metadata, and year-specific result with respect to the corresponding specific technology in a certain area of the technology lifecycle graph.
